# FASCICULE DE BREVET EUROPEEN

(11) **EP 1 811 273 B1**
(45) Date de publication et mention de la délivrance du brevet: **04.04.2012**
(21) Numéro de dépôt: 07000750.5
(22) Date de dépôt: 16.01.2007
(51) Int. Cl.: G01D 18/00

(54) **Procédé de mesure du déplacement d'un volet roulant et procédés de configuration et de commande utilisant le procédé de mesure**
Messverfahren der Bewegung eines Rollladens und Konfigurations- und Steuerverfahren, das dieses Messverfahren nützt
Method of measuring the movement of a roller blind and configuration and control methods using the measurement method

(30) Priorité: 23.01.2006 FR 0600576
(43) Date de publication de la demande: 25.07.2007
(73) Titulaire: Somfy SAS, 74300 Cluses (FR)
(72) Inventeur: Pellarin, Florent, 74370 Saint-Martin Bellevue (FR); Mommaerts, Dirk, 72108 Rottenburg-Seebronn (DE); Lasar, Jürgen, 72116 Moessingen (DE)
(74) Mandataire: Bugnion Genève

(56) Documents cités:
- EP-A- 0 389 155
- EP-A- 1 612 629
- DE-U1- 20 000 682
- FR-A- 2 793 832
- US-A1- 2001 000 294

## Description

L'invention se rapporte à un procédé de configuration d'une unité de commande d'un actionneur selon le préambule de la revendication 1. L'invention concerne encore un procédé de commande d'un actionneur incluant un moteur pour manoeuvrer un élément mobile d'un équipement domotique de fermeture, d'occultation, de protection solaire ou d'écran. L'invention concerne aussi un équipement domotique de fermeture, d'occultation, de protection solaire ou d'écran comprenant un élément mobile.

Il est connu de commander le fonctionnement automatique d'équipements domotiques mobiles comprenant un élément mobile, par exemple, un volet roulant, une porte de garage, un portail à mouvement linéaire, un portail à mouvement rotatif, un store vénitien à lames horizontales, une fenêtre pivotante. Cette commande utilise des informations issues d'un ou plusieurs capteurs, comme décrit par exemple dans la demande de brevet US 2001/000294.

Ce ou ces capteurs sont disposés soit à l'intérieur de l'actionneur de l'équipement domotique, soit directement au niveau de l'élément mobile.

Quand le capteur est dans l'actionneur, il mesure par exemple la rotation de l'arbre de sortie du moteur, ou encore la rotation de l'arbre de sortie du réducteur entraîné par le moteur, ou encore, s'il s'agit d'un vérin, le déplacement linéaire de la tige de celui-ci. Dans certains cas, le capteur mesure une grandeur électrique image de la vitesse du moteur : par exemple la tension aux bornes du condensateur de déphasage, s'il s'agit d'un moteur monophasé à induction et condensateur permanent, ou par exemple la force électromotrice de mouvement s'il s'agit d'un moteur à courant continu à aimants permanents.

Le problème posé par ces dispositifs est qu'il n'existe, en général, pas de relation proportionnelle entre la grandeur mesurée et le déplacement de l'équipement mobile.

Dans le cas d'un volet roulant par exemple, le tablier du volet s'enroule sur un tube. Il résulte de l'épaisseur du tablier que le rayon d'enroulement augmente au fur et à mesure de l'ouverture. Selon la nature du tablier, une même valeur du déplacement en rotation vu par le moteur, peut donner naissance à des valeurs de déplacement de tablier très différentes selon que le tablier arrive sur une butée haute (diamètre d'enroulement maximum) ou sur une butée basse (diamètre d'enroulement minimum). Il en résulte une réelle difficulté à contrôler l'effort à ne pas dépasser lors de l'arrivée du tablier en contact avec une butée ou un obstacle.

Dans le cas d'une porte de garage basculante, le mouvement vertical du bas de la porte obéit également à une relation non linéaire avec la rotation du moteur d'entraînement permettant de déplacer un chariot sur un rail horizontal. Cela se traduit de nouveau par des écarts très significatifs dans la relation liant le couple moteur et l'effort appliqué sur la porte, selon le degré d'ouverture de celle-ci. Pour contrôler l'effort à ne pas dépasser lors de l'arrivée de la porte en contact avec un obstacle, il est connu, de procéder à une opération d'apprentissage, permettant par exemple de découper la trajectoire par zones, et d'ajuster la valeur du couple moteur pour qu'il soit légèrement supérieur au couple nécessaire.

Dans le cas d'un store vénitien à lames horizontales comprenant un seul moteur, un dispositif appelé « basculateur », entraîné par l'arbre de rotation, agit sur des échelles supportant les lames du tablier. La rotation de l'arbre de rotation provoque celle du basculateur, et donc une plus ou moins grande inclinaison des lames. Dans certaines conditions d'ensoleillement, il suffit d'un écart minime entre les inclinaisons des basculateurs de deux stores vénitiens voisins pour provoquer un effet visuel très différent. Pour la bonne homogénéité architecturale d'une façade, et le confort visuel des occupants, il est important que les différents équipements soient dans le même état, et donc de repérer et reproduire précisément les positions angulaires du moteur correspondant aux positions extrêmes du basculateur. Cependant, les actionneurs utilisés pour entraîner des stores vénitiens comportent le plus souvent un capteur de rotation disposé à la sortie du moteur et non à la sortie du réducteur. Il en résulte que le jeu du réducteur, et par conséquent le rattrapage de jeu intervenant lors de chaque inversion de sens, influencent considérablement la relation existant entre la valeur fournie par le capteur et la position de l'équipement domotique, cette relation a de ce fait une allure hystérétique. De plus, l'intensité du jeu n'est pas constante mais dépend de la charge appliquée, donc du plus ou moins grand déploiement du tablier du store vénitien. Dans le cas où la commande de rotation du moteur se fait directement à partir du temps de manoeuvre et non avec un capteur de rotation, la situation est pire encore puisque interviennent aussi les temps d'ouverture et de blocage du frein d'immobilisation et/ou les temps d'actionnement des relais d'activation du moteur.

Pour pallier à ces divers inconvénients, liés à la non-linéarité de la relation entre grandeurs d'entrée et de sortie, il est connu dans certains cas de disposer le capteur de mouvement directement sur l'élément mobile. Un tel capteur nécessite alors généralement un contact physique entre une partie fixe et une partie mobile de l'équipement.

Par exemple, le brevet US 5,198,974 et la demande de brevet FR 2 691 746 décrivent de tels dispositifs dans lesquels il est possible de suivre indirectement le mouvement de la barre de charge d'un volet roulant.

La demande de brevet US 2004/0187387 décrit l'émission d'une information de tension issue d'un micro-générateur disposé sur la barre de charge et entraîné par le mouvement relatif de celle-ci par rapport aux glissières.

Il est clair que ces différents capteurs entraînent de graves contraintes d'installation au cas par cas, ce qui a considérablement nui à leur développement sur le marché.

D'autres capteurs ne nécessitent pas un tel contact physique entre la partie fixe et la partie mobile, mais c'est parce qu'ils bénéficient d'une périodicité intrinsèque à l'une des parties. La demande de brevet WO 05/085578 décrit par exemple un moyen de comptage de position sans contact dans le cas d'une motorisation linéaire, par exemple de rideaux sur une tringle. L'inconvénient est alors que la précision de la détection est liée à la périodicité de la structure, dont le pas est en général choisi sur de tout autres critères.

On connaît du modèle d'utilité DE 200 00 682 U1 l'utilisation d'un accéléromètre sur la barre de charge d'un volet roulant pour détecter des tentatives d'intrusion lorsque le volet est fermé, ou l'arrivée sur une butée lorsque le moteur du volet est alimenté. Cette utilisation ne permet de déterminer que quelques positions particulières du volet roulant telles que les fins de course.

Le document US 2001/0000294 décrit un dispositif de commande de volet roulant dans lequel on compare la vitesse du volet roulant à une vitesse de référence.

Le but de l'invention est de fournir un procédé de commande de manoeuvre d'équipement domotique palliant aux inconvénients cités et améliorant les procédés connus de l'art antérieur. En particulier, le procédé permet la commande de la manoeuvre d'un équipement domotique motorisé en s'affranchissant de l'éventuelle non linéarité existant entre la position de rotation du moteur et la position de l'équipement domotique et en s'affranchissant d'utiliser un capteur de position de l'équipement domotique nécessitant un contact physique entre une partie fixe et une partie mobile de l'équipement. Le but de l'invention est encore de fournir un équipement domotique permettant de mettre en oeuvre un tel procédé.

Le procédé de configuration selon l'invention est caractérisé par la partie caractérisante de la revendication 1.

Différents modes d'exécution du procédé de configuration sont définis par les revendications dépendantes 2 à 6.

Le procédé de commande selon l'invention est défini par la revendication 7.

L'équipement domotique selon l'invention est défini par la revendication 8.

Un mode de réalisation de l'équipement est défini par la revendication 9.

Le dessin annexé illustre, à titre d'exemples, un mode de réalisation d'un équipement domotique selon l'invention et des modes d'exécution de procédés selon l'invention.

La figure 1 est un schéma d'un mode de réalisation d'un équipement domotique selon l'invention.

La figure 2 est un ordinogramme d'un mode d'exécution d'un procédé de commande selon l'invention.

La figure 3 est un ordinogramme d'un mode d'exécution d'un procédé de configuration selon l'invention.

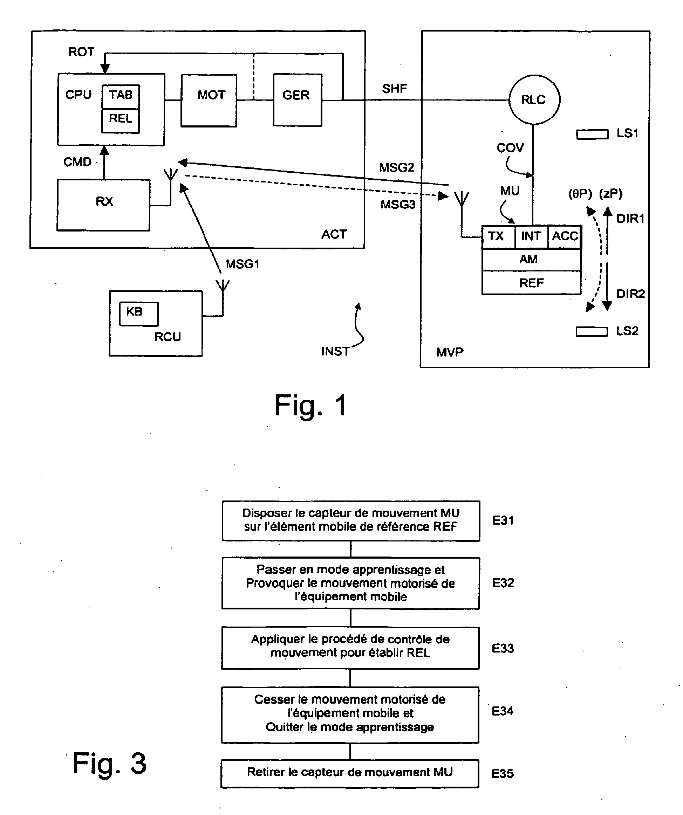

L'équipement domotique INST, représenté à la figure 1, comprend un actionneur ACT muni d'un moteur MOT dont l'arbre de sortie entraîne un réducteur GER. L'arbre de sortie SHF du réducteur GER constitue l'arbre de sortie de l'actionneur. Il est raccordé à la partie mobile MVP de l'équipement domotique, dont il commande le mouvement, étant lié cinématiquement à un tube d'enroulement RLC sur lequel s'enroule un élément mobile enroulable COV. Par la commande de l'alimentation électrique du moteur, on commande les déplacements de l'élément mobile enroulable. L'élément mobile enroulable COV comprend un élément de référence REF, par exemple une des lames dans le cas d'un volet roulant.

Le moteur MOT est activé dans un premier sens ou dans un deuxième sens par une unité CPU de commande de l'alimentation du moteur MOT, cette unité comprenant par exemple un microcontrôleur. L'unité de commande reçoit des ordres de commande par le biais d'un récepteur d'ordres RX relié à celle-ci par une liaison CMD. Les ordres sont transmis à l'aide d'une interface de commande distante RCU, par exemple nomade, munie d'une interface homme-machine KB comportant au moins une touche de commande. De préférence, l'interface de commande distante RCU communique par ondes radioélectriques avec le récepteur d'ordres, comme représenté par la flèche MSG1. De préférence, la liaison entre l'interface de commande et le récepteur d'ordres est de type bidirectionnel, ce qui permet d'afficher sur l'interface de commande distante RCU des messages relatifs à l'état de l'actionneur.

Au moins une première grandeur interne ROT relative à la rotation du moteur est mesurée par l'unité de commande CPU. Cette grandeur est préférentiellement donnée par la sortie d'un capteur de rotation disposé à la sortie du réducteur GER. Alternativement, le capteur de rotation peut être disposé à la sortie du moteur MOT, comme représenté par un trait pointillé. Dans une variante, la grandeur interne ROT relative à la rotation du moteur est la durée d'activation du moteur. Dans ce cas, cette grandeur est mesurée par un compteur de temps du microcontrôleur compris dans l'unité de commande CPU.

Dans une variante, cette grandeur interne peut être une grandeur TQ relative au couple mécanique fourni par le moteur et mesurée directement au niveau du moteur, en utilisant l'intensité du courant si le moteur est à courant continu et aimants permanents ou en utilisant la tension aux bornes du condensateur de déphasage si le moteur est à induction, monophasé, à condensateur permanent. Alternativement, le couple TQ est mesuré indirectement au niveau du réducteur ou en toute autre partie de l'actionneur.

Dans chaque cas, une combinaison des différentes variantes est aussi utilisable pour définir une grandeur interne.

Dans la partie mobile MVP de l'équipement domotique représenté, l'arbre de sortie SHF de l'actionneur est raccordé à un dispositif de conversion de mouvement RLC, qui entraîne le mouvement de l'élément mobile COV enroulable. Il peut cependant également s'agir d'un élément mobile rigide, mais se déplaçant dans un mouvement de translation-rotation, ou encore d'un élément mobile constitué de lames orientables et empilables.

Dans tous les cas, le mouvement d'un élément de référence REF de l'élément mobile est caractérisé par un déplacement en translation zP selon un premier sens DIR1 ou selon un deuxième sens DIR2 d'une même direction opposé au sens précédent.

Alternativement, le mouvement de l'élément de référence REF de l'élément mobile est un mouvement de rotation θP dans l'un ou l'autre de deux sens opposés, comme représenté sur la figure 1 par des flèches courbes en trait pointillé.

Le mouvement de translation et/ou le mouvement de rotation est limité par une première butée LS1 et/ou par une deuxième butée LS2.

Alternativement, une combinaison de plusieurs mouvements est utilisée, par exemple dans un store vénitien ou pour une porte basculante.

Dans un mode de réalisation préféré, un capteur de mouvement MU est solidaire de l'élément de référence, d'une façon qui n'entrave pas le mouvement de cet élément et ne présente pas de contact physique avec la partie fixe de l'équipement domotique. Ce capteur de mouvement comprend un accéléromètre ACC trois axes, c'est-à-dire mesurant l'accélération selon trois axes. Alternativement, un accéléromètre deux axes peut être utilisé, ou même un simple accéléromètre unidirectionnel dans le cas d'équipement domotique pouvant être manoeuvrés selon des trajectoires simples. Il comprend également des moyens INT d'intégration double permettant de déduire des mesures d'accélération la vitesse, puis le déplacement de l'élément de référence. Il comprend enfin un émetteur d'ondes radioélectriques TX permettant la transmission d'informations vers le récepteur RX de l'actionneur ACT, comme représenté par la flèche MSG2. Préférentiellement, la liaison radioélectrique est bidirectionnelle, ce qui permet au capteur de mouvement MU de n'être activé qu'à la réception d'un message d'activation émis par l'actionneur, comme représenté par la flèche en trait pointillé MSG3. Les protocoles et fréquences de communication ne sont pas nécessairement identiques entre l'actionneur et l'unité de commande distante et entre l'actionneur et le capteur de mouvement. Le capteur de mouvement comprend un mode « Sommeil » dans lequel il n'émet pas d'information vers l'actionneur pour réduire sa consommation et un mode « Actif » dans lequel il émet des informations vers l'actionneur. Le passage du mode sommeil au mode actif est provoqué par la réception d'un ordre particulier ou, en variante, directement par la détection d'un début de mouvement.

De préférence, le capteur de mouvement MU est fixé de manière amovible sur l'élément de référence en utilisant des moyens AM de fixation amovible. De cette manière, le capteur de mouvement et, par conséquent, l'accéléromètre peuvent avantageusement être monté et démonté sans outil. Les moyens AM de fixation amovible peuvent par exemple comprendre des moyens de clippage.

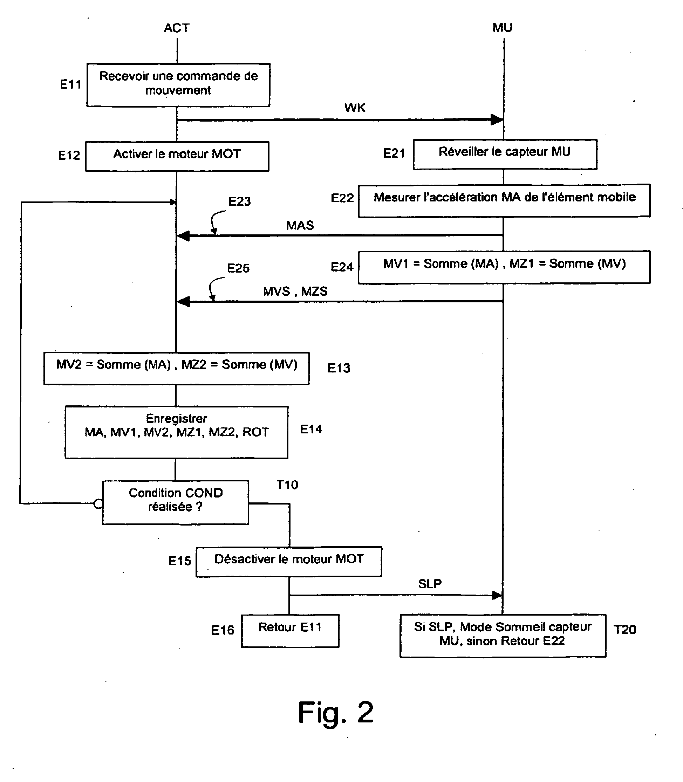

Un mode d'exécution de procédé de commande de mouvement selon l'invention est décrit en référence à la figure 2 dans le cas d'un volet roulant. Le capteur de mouvement MU est solidaire de la barre de charge du volet, constituant l'élément de référence REF.

La partie gauche de cette figure représente les différentes étapes du procédé au niveau de l'actionneur, tandis que la partie droite représente les différentes étapes du procédé au niveau du capteur de mouvement.

Dans une étape préliminaire, l'actionneur est placé dans un mode de réception d'ordres, qui lui permet de recevoir une commande de mouvement émise par l'interface de commande distante RCU.

Dans une première étape E11, l'actionneur reçoit une commande de mouvement émise par l'interface de commande distante RCU.

Lorsqu'une telle commande est reçue, l'actionneur émet vers le capteur de mouvement MU un message de réveil WK, ce qui a pour effet de faire passer, dans une étape E21, le capteur de mouvement MU du mode sommeil au mode actif.

Dans une étape E12, le moteur MOT est activé dans le sens de rotation correspondant à l'ordre reçu à l'étape E11. Ceci provoque le début du déplacement de l'élément mobile.

Dans une variante du procédé, il n'est pas envoyé de message de réveil WK, et l'étape de réveil E21 est directement provoquée par une détection de mouvement: celle-ci active l'émetteur TX d'ondes radioélectriques du capteur de mouvement. Pour que la détection se fasse de manière nette, le moteur MOT peut être brièvement activé dans le sens opposé à l'ordre de mouvement avant d'être activé dans le sens correspondant à l'ordre de mouvement.

Dans une étape E22, on mesure l'accélération MA de l'élément mobile grâce à l'accéléromètre ACC et on émet, dans une étape E23, vers l'actionneur une information sur la valeur mesurée.

Dans une étape E24, une intégration est effectuée au sein des moyens INT d'intégration du capteur de mouvement pour déterminer la valeur instantanée de la vitesse MV1 et la valeur instantanée de la position verticale de l'élément de référence MZ1. La sommation, à intervalles réguliers, des mesures d'accélération donne une première mesure de vitesse MV1. La sommation, à intervalles réguliers, des premières mesures de vitesse donne une première mesure de position MZ1. Des informations comprenant des valeurs de vitesse MV1 et/ou de position MZ1 sont aussitôt émises, dans une étape E25, vers l'actionneur.

Dans une étape T20, on teste si le capteur de mouvement a reçu un message de mise en sommeil SLP. Si tel est le cas, le capteur de mouvement passe en mode sommeil et si tel n'est pas le cas, le capteur de mouvement boucle sur l'étape E22. Ainsi donc, la mesure de l'accélération de l'élément de référence a lieu de manière continue au cours de l'activation du moteur MOT. Par « continue », il faut entendre que le processus se répète aussi souvent que le permettent les moyens de mesure et d'émission, la précision n'étant limitée que par la fréquence d'échantillonnage ou par les contraintes d'occupation du spectre des fréquences radioélectriques.

Afin de réduire le nombre des émissions, il est possible en variante de n'émettre l'information de mesure d'accélération MA que lors d'une variation significative de cette mesure, tandis que ne sont émises de manière répétée que les informations de première mesure de vitesse MV1 et/ou de position MZ1. Les émissions d'information de vitesse et/ou de position se produisent alors à un rythme plus faible que celui des mesures d'accélération et d'intégration (ou sommation) de ces mesures : par exemple une émission pour 10 pas de mesure, voire une émission pour 100 pas de mesure.

Inversement, l'intégration des données de mesure d'accélération MA peut être effectuée dans l'actionneur comme représenté à l'étape E13 : la sommation des mesures d'accélération MA donnant une deuxième mesure de vitesse MV2, la sommation des deuxièmes mesures de vitesse MV2 donnant une deuxième mesure de position MZ2. Dans ce cas, les moyens d'intégration INT font partie de l'actionneur; ils sont par exemple intégrés à l'unité de commande CPU.

Dans une étape E14, l'ensemble des données (mesurées directement ou calculées par intégration) est enregistré dans une table TAB logée dans l'unité de commande CPU, de même que la grandeur interne de mesure de rotation ROT. Cet enregistrement est particulièrement utile en mode de configuration, lors d'une première configuration ou lors de réajustements périodiques, ou encore en vue de la maintenance de l'équipement domotique. En dehors de ces apprentissages particuliers pour la constitution ou la mise à jour de la table TAB, l'étape E14 peut être supprimée.

De même, l'étape E13 n'est utile que si l'étape étape E24 n'est pas implantée dans le procédé.

Dans une étape T10, on teste si une condition particulière COND est réalisée. Cette condition porte sur les mesures et calculs précédents et leurs comparaisons avec des seuils prédéfinis ou définis à partir des valeurs de configuration enregistrées dans la table TAB.

La comparaison porte sur des valeurs de seuil obtenues par apprentissage. Il s'agit par exemple de la comparaison de la première mesure de position MZ1 avec deux valeurs extrêmes enregistrées lors d'une procédure de configuration.

Il peut aussi s'agir par exemple de comparer la mesure absolue d'accélération MA (valeur courante) à une valeur de seuil déterminée en proportion de la valeur de crête de cette accélération mesurée lors de l'activation du moteur et stockée dans la table. Si les signes sont opposés et si la valeur de seuil est dépassée, alors la condition COND est réalisée.

La condition COND peut aussi porter sur la grandeur interne ROT.

Tant que la condition COND n'est pas réalisée, le procédé boucle sur la sortie de l'étape E12 d'activation du moteur. Les nouvelles informations émises par le capteur sont donc acquises de manière continue.

Si la condition COND est satisfaite, alors le procédé passe à une étape E15, dans laquelle le moteur MOT est désactivé. Un message de mise en sommeil SLP est alors adressé au capteur de mouvement et le capteur est éventuellement placé en mode sommeil. Dans une étape E16, le procédé boucle sur la première étape E11.

Le test T10 est utilisé dans le procédé lors de tout fonctionnement normal, et particulièrement lors d'un fonctionnement automatisé de l'installation. Cependant, ce test n'est pas utilisé, ou peut n'être que partiellement utilisé, lors d'un fonctionnement de configuration, au cours duquel l'installateur commande lui-même la mise en route et l'arrêt du moteur.

Un mode d'exécution de procédé de configuration est décrit en référence à la figure 3. Ce procédé permet de n'utiliser qu'un seul capteur de mouvement dans une installation comportant plusieurs équipements domotiques.

Dans une première étape E31, l'installateur fixe le capteur de mouvement MU sur un élément de référence REF d'un premier équipement domotique, par exemple sur la barre de charge d'un volet roulant ou encore sur une lame orientable d'un store vénitien.

Dans une deuxième étape E32, l'installateur fait passer l'unité de commande CPU de l'actionneur du premier équipement dans un mode de configuration, en provoquant par exemple une séquence particulière d'appuis sur l'interface homme-machine KB de l'interface de commande distante RCU. Ce passage en mode de configuration a lieu par exemple à partir d'une position particulière complètement ouverte ou complètement fermée du volet roulant ou du store vénitien. L'installateur envoie ensuite une commande de mouvement. Alternativement, c'est le fait d'être passé en mode de configuration qui provoque la commande de mouvement.

Dans une troisième étape E33, une procédure de commande de mouvement comprenant des sous-étapes correspondant à certaines des étapes E21, E22, (E24 et E25) ou E13 et E14 décrites précédemment est appliquée. Cette procédure permet d'établir une relation entre la grandeur interne ROT et le mouvement détecté par le capteur de mouvement MU à partir de mesures continues d'accélération. Au minimum, cette procédure comprend l'étape E22, l'étape E23 et l'étape E14. Selon les variantes, les étapes E13 et E24 sont également actives.

Lors de l'étape E14, sont simultanément enregistrés les valeurs de la grandeur interne ROT et au moins une des valeurs mesurées (ou calculées) d'accélération, de vitesse ou de position : MA, MV1, MV2, MZ1, MZ2.

Cet enregistrement a lieu sous forme d'une table, ou de manière préférée, sous forme d'une relation REL liant la grandeur interne ROT à au moins l'une de ces valeurs. De même que la grandeur interne ROT peut avoir plusieurs composantes, la relation REL peut être multiple.

Lors d'une quatrième étape E34, le mouvement du moteur cesse, soit du fait d'une commande d'arrêt émise par l'installateur quand le produit atteint une position particulière, soit parce que le test actionneur T10 est actif en mode de configuration et qu'il a détecté la réalisation d'une condition COND provoquant l'arrêt. L'installateur quitte alors le mode de configuration. Alternativement, l'apprentissage est plus complexe, et requiert par exemple un deuxième mouvement de sens opposé au précédent avant de quitter le mode de configuration.

Dans une cinquième étape E35, l'installateur retire le capteur de mouvement. Celui-ci devient disponible pour la configuration d'un autre équipement domotique.

L'intérêt d'un mode d'exécution de procédé de configuration est qu'il permet ensuite un fonctionnement normal de l'installation utilisant un procédé de commande des mouvements similaires à celui décrit en référence à la figure 2 mais dans lequel les étapes relatives au capteur de mouvement MU sont supprimées. En effet, celui-ci n'intervient plus qu'indirectement, au travers de la relation REL qu'il a permis d'établir, et qui est alors utilisée pour définir une condition COND produisant un ordre d'arrêt du moteur quand elle est satisfaite ou définir toute autre condition à l'origine de tout autre commande.

En premier exemple, l'équipement domotique est un volet roulant entraîné par un actionneur comprenant un moteur MOT de type quelconque, équipé d'un capteur de rotation en bout d'arbre, et un réducteur GER avec jeu important entre l'arbre d'entrée et l'arbre de sortie.

La relation REL établie lors de l'apprentissage permet de lier la position du volet (MZ1 ou MZ2) à la valeur mesurée par le capteur de rotation délivrant la grandeur interne ROT. Seule la grandeur ROT peut servir ensuite dans la condition COND. L'arrêt aura lieu à une position verticale bien définie, bien que la mesure soit faite à partir du capteur de rotation, car les jeux sont pris en compte ainsi que la variation de rayon d'enroulement.

De plus, en phase de configuration de fermeture du volet, si celui-ci est à lames empilables, il aura été possible de repérer de manière automatique plusieurs positions particulières comme la position précise où la lame finale atteint la butée basse (intégrale d'accélération nulle) et la position dite de verrouillage du volet, lorsque se termine l'empilement des lames et que le tablier devient comprimé par le mouvement de rotation du moteur : cette mise en tension du tablier se traduit par un léger mouvement de la lame finale qui est détectable par le capteur de mouvement MU.

En deuxième exemple, l'équipement mobile est un volet roulant et le moteur est de type monophasé à induction et condensateur permanent. La grandeur interne ROT comprend deux composantes :
- la tension ROT1 aux bornes du condensateur (liée à la vitesse de rotation du moteur) et
- la durée de manoeuvre ROT2.

La relation REL établie lors de l'apprentissage permet de lier la position du volet (MZ1 ou MZ2) et/ou sa vitesse linéaire (MV1 ou MV2) à la durée de manoeuvre ROT2. La connaissance de la vitesse de rotation du moteur déterminée à partir de la tension aux bornes du condensateur ROT1 et sa comparaison avec la vitesse linéaire permet la connaissance à tout instant du rayon d'enroulement, et donc de la relation entre couple moteur et effort appliqué. Pour un moteur alimenté sous tension donnée, le couple moteur est directement lié à la vitesse de rotation : il est donc ensuite possible, en fonctionnement normal, de commander l'actionneur à partir de la connaissance des deux seules grandeurs internes ROT1 et ROT2, tout en assurant la qualité du déplacement linéaire et un contrôle de l'effort exercé sur la lame finale.

Le même type de fonctionnement s'applique à une porte de garage basculante. Dans ce cas, l'accéléromètre sera préférentiellement de type permettant la détection d'un mouvement selon deux axes (un axe horizontal et un axe vertical). Un accéléromètre trois axes peut s'avérer moins coûteux, même si le troisième axe n'est pas utilisé.

En troisième exemple, l'équipement mobile est une protection solaire de type store vénitien, à lames ou lamelles horizontales et inclinables. Le capteur de position est préférentiellement un accéléromètre deux ou trois axes. Le moteur est de type à courant continu et la grandeur interne ROT de l'actionneur comprend deux composantes :
- le courant d'induit du moteur ROT1,
- la durée de manoeuvre ROT2.

En mode de configuration, l'accéléromètre est par exemple disposé sur un prolongement de la lamelle inclinable la plus basse du store vénitien, qui a été déployé jusqu'à la position la plus basse désirée. Un cycle de configuration automatique consiste, dans une première phase, en une remontée du tablier du store vénitien jusqu'à empilement complet des lamelles. Cet événement est repéré à la fois par la mesure d'arrêt de la lamelle, donnée par l'accéléromètre, et par le courant d'induit du moteur. Il permet de connaître la longueur du tablier.

En fait la lamelle basse ne s'arrête pas totalement au moment où la lamelle haute de l'ensemble des lamelles empilées entre en contact avec le caisson du store vénitien, contenant l'actionneur : si le moteur continue à être alimenté, il y a compression progressive du paquet de lamelles contre le caisson. Ce mouvement très faible est néanmoins détecté par l'accéléromètre et permet non seulement une mesure fine de la compression, mais aussi de relier cette mesure à la valeur croissante du courant d'induit du moteur. Pour une compression maximale à ne pas dépasser, fixée par le fabricant en fonction de l'élasticité des lamelles et/ou du cordon d'enroulement, une valeur du courant d'induit du moteur, servant de première grandeur interne ROT1, peut donc être déterminée avec précision.

Dans une deuxième phase du cycle de configuration, le store vénitien est progressivement déployé, avec un ou plusieurs arrêts intermédiaires. Au cours de chaque arrêt intermédiaire, un mouvement de sens inverse du moteur est engagé, ce qui a pour effet d'activer le basculateur et d'incliner progressivement les lamelles, depuis une première position complètement fermée jusqu'à une deuxième position complètement fermée, comme expliqué dans la demande de brevet FR 2 863 647. Puis de nouveau un mouvement de sens direct est poursuivi pour continuer le déploiement. Au cours de ces mouvements, les durées de manoeuvre sont enregistrées, et notamment les délais entre le début de rotation du moteur et le début de rotation de la lamelle : ainsi les jeux mécaniques spécifiques à ce store vénitien peuvent-ils être pris en compte, dans un sens comme dans l'autre, et ceci pour différentes valeurs de la charge, c'est-à-dire pour différentes valeurs de déploiement du store vénitien.

De plus, l'angle de la lamelle par rapport à une direction verticale est mesuré avec précision à partir des informations du capteur de mouvement (fonctionnement en inclinomètre de l'accéléromètre). Une relation précise entre la durée de manoeuvre et l'angle d'inclinaison des lamelles peut donc également être établie.

L'ensemble de ces données constitue une relation REL.

Par la suite, en fonctionnement normal, les relations REL établies dans chaque actionneur, et différentes a priori d'un actionneur à l'autre, permettent de commander un ensemble de stores vénitiens d'une même façade, cette fois dépourvus de leur capteur de mouvement MU, en communiquant aux actionneurs des consignes communes de déploiement et d'inclinaison des lamelles. Chaque actionneur détermine la durée de manoeuvre appropriée, à partir d'une position de référence repérée précisément par analyse du courant d'induit du moteur.

Un pilotage homogène des protections solaires à partir de la position du soleil (ou à partir des données d'une horloge astronomique) est donc obtenu à moindres frais, de manière aisée, grâce à la qualité des informations fournies par le capteur de mouvement durant le procédé de configuration.

Si le capteur de mouvement MU est monté à demeure sur le produit mobile, la première étape E31 et la dernière étape E35 du procédé de configuration sont supprimées.

Par intégration d'une grandeur, on entend toute méthode numérique ou analogique permettant d'obtenir une image de l'intégrale mathématique temporelle de cette grandeur. L'intégration peut être réalisée numériquement par sommation de la valeur de la grandeur mesurée à intervalles réguliers. Elle peut aussi être réalisée par un intégrateur analogique, par exemple comportant un amplificateur opérationnel, un condensateur et une résistance. Dans ce cas, un intégrateur analogique simple ou double est prévu dans les moyens d'intégration INT.

## Revendications

1. Procédé de configuration d'une unité de commande (CPU) d'un actionneur (ACT) incluant un moteur (MOT) pour manoeuvrer un élément mobile (COV) d'un équipement domotique (INST) de fermeture, d'occultation, de protection solaire ou d'écran, l'élément mobile étant de type enroulable, ou de type rigide et se déplaçant dans un mouvement de translation-rotation, ou encore étant constitué de lames orientables et empilables, **caractérisé en ce qu'**il comprend :
- une phase d'alimentation du moteur pendant laquelle au moins une grandeur caractéristique (MV1, MV2, MZ1, MZ2) du déplacement de l'élément mobile est obtenue à l'aide d'une procédure de mesure comprenant au moins une étape d'intégration d'une grandeur physique fournie par un accéléromètre (ACC) compris dans un capteur de mouvement (MU) solidaire d'un élément de référence (REF) de l'élément mobile, au moins une grandeur (ROT, ROT1, ROT2) interne à l'actionneur étant mesurée pendant cette phase d'alimentation, et
- une phase de détermination d'une relation (REL) entre la grandeur caractéristique et la grandeur interne.

2. Procédé de configuration selon la revendication 1, **caractérisé en ce que** l'élément de référence est une lame finale d'un volet roulant ou une barre de charge d'un volet roulant ou une porte de garage basculante ou une lame orientable d'un store vénitien ou un prolongement d'une lamelle basse de store vénitien.

3. Procédé de configuration selon la revendication 1 ou 2, **caractérisé en ce que** la grandeur caractéristique est une longueur de déplacement ou un angle de déplacement.

4. Procédé de configuration selon l'une des revendications précédentes, **caractérisé en ce que** la grandeur interne comprend au moins une valeur de position d'un arbre de l'actionneur, une valeur de vitesse ou de courant du moteur, ou une valeur de durée d'activation de l'actionneur.

5. Procédé de configuration selon l'une des revendications précédentes, **caractérisé en ce que** la phase de détermination a lieu pendant la phase d'alimentation.

6. Procédé de configuration selon l'une des revendications précédentes, **caractérisé en ce que** la phase d'alimentation est précédée par une phase de mise en place de l'accéléromètre (ACC) sur l'élément mobile (COV), et **en ce que** la phase de détermination est suivie d'une phase de dépose de l'accéléromètre de l'élément mobile.

7. Procédé de commande d'un actionneur (ACT) incluant un moteur (MOT) pour manoeuvrer un élément mobile (COV) d'un équipement domotique (INST) de fermeture, d'occultation, de protection solaire ou d'écran, **caractérisé en ce que** la commande d'actions est provoquée en utilisant la grandeur (ROT, ROT1, ROT2) interne à l'actionneur et la relation (REL) établie de manière préalable par utilisation du procédé de configuration selon l'une des revendications précédentes.

8. Equipement domotique (INST) de fermeture, d'occultation, de protection solaire ou d'écran comprenant un élément mobile (COV), **caractérisé en ce qu'**il comprend un accéléromètre (ACC) fixé à l'élément mobile et des moyens matériels (INT, TX, RX, CPU) et logiciels adaptés à mettre en oeuvre un procédé selon l'une des revendications précédentes.

9. Equipement domotique selon la revendication précédente, **caractérisé en ce qu'**il comprend des moyens (AM) pour fixer de manière amovible l'accéléromètre à l'élément mobile.

## Claims

1. A method of configuring a control unit (CPU) of an actuator (ACT) including a motor (MOT) for operating a movable element (COV) of a home automation equipment item (INST) of closure, privacy, sun protection or screening, the movable element being:
• of a rollable type, or
• of a rigid type and moving in a movement of translation-rotation, or
• a movable element consisting of orientable and stackable slats,
the method comprising:
- a phase for supplying the motor during which at least one characteristic quantity (MV1, MV2, MZ1, MZ2) of the movement of the movable element is obtained with the aid of a measurement procedure comprising at least one step of integrating a physical quantity supplied by an accelerometer (ACC) comprised in a movement sensor (MU) which is secured to a reference element (REF) of the movable element, at least one quantity (ROT, ROT1, ROT2) internal to the actuator being measured during this supply phase, and
- a phase for determining a relation (REL) between the characteristic quantity and the internal quantity.

2. The configuration method as claimed in claim 1, wherein the reference element is a final slat of a roller blind or a load bar of a roller blind or a tilting garage door or an orientable slat of a Venetian blind or an extension of the inclinable low slat of the Venetian blind.

3. The configuration method as claimed in 1 or 2, wherein the characteristic quantity is a length of move or an angle of move.

4. The configuration method according to one of the preceding claims, wherein the internal quantity comprises at least one value of the position of a shaft of the actuator, one value of speed or of current of the motor, or one value of duration of activation of the actuator.

5. The configuration method according to one of the preceding claims, wherein the determination phase takes place during the supply phase.

6. The configuration method according to one of the preceding claims, wherein the supply phase is preceded by a phase for installing the accelerometer (ACC) on the movable element (COV), and wherein the determination phase is followed by a phase of removal of the accelerometer from the movable element.

7. A method of controlling an actuator (ACT) including a motor (MOT) for operating a movable element (COV) of a home automation equipment item (INST) of closure, privacy, sun protection or screening, wherein the action control is generated by using the quantity (ROT, ROT1, ROT2) internal to the actuator and the relation (REL) previously established by use of the configuration method according to one of the preceding claims.

8. A home automation equipment item (INST) of closure, privacy, sun protection or screening comprising a movable element (COV), which comprises an accelerometer (ACC) attached to the movable element and hardware means (INT, TX, RX, CPU) and software means for applying the method of one of the preceding claims.

9. The home automation equipment item as claimed in the preceding claim, which comprises means (AM) for removably attaching the accelerometer to the movable element.

## Patentansprüche

1. Verfahren zur Konfiguration einer Steuereinheit (CPU) einer Antriebsvorrichtung (ACT) mit einem Motor (MOT) zwecks Bewegung eines beweglichen Elements (COV) einer haustechnischen Einrichtung (INST) zum Verschliessen, zum Verdunkeln, zum Sonnenschutz oder zur Abschirmung, wobei das bewegliche Element aufrollbar ist oder ein starres Element ist, welches eine translatorischrotative Bewegung ausführen kann oder ein Element mit orientierbaren und stapelbaren Lamellen ist, **gekennzeichnet durch**
- eine Phase der Energiespeisung des Motors, in deren Verlauf mindestens eine Kenngrösse (MV1, MV2, MZ1, MZ2) der Bewegung des beweglichen Elements mit Hilfe eines Messverfahrens ermittelt wird, das mindestens einen Schritt der Integration einer physikalischen Grösse umfasst, welche von einem Beschleunigungsmesser (ACC) geliefert wird, das Bestandteil eines Bewegungsmelders (MU) ist, der in einem Bezugselement (REF) des beweglichen Elements eingebaut ist, wobei mindestens eine interne Grösse (ROT, ROT1, ROT2) der Antriebsvorrichtung im Verlaufe dieser Speisungsphase gemessen wird, und
- eine Phase zur Bestimmung einer Beziehung (REL) zwischen der Kenngrösse und der internen Grösse.

2. Verfahren zur Konfiguration nach Anspruch 1, **dadurch gekennzeichnet, dass** das Bezugselement eine Endlamelle eines Lamellenstoren oder die Belastungsstange eines Rolladens oder ein kippbares Garagentor oder eine orientierbare Lamelle eines Lamellenstoren oder eine Verlängerung einer unteren Lamelle eines Lamellenstoren ist.

3. Verfahren zur Konfiguration nach Anspruch 1 oder 2, **dadurch gekennzeichnet, dass** die Kenngrösse eine Länge des Verschiebungswegs oder ein Verschiebungswinkel ist.

4. Verfahren zur Konfiguration nach einem der vorstehenden Ansprüche, **dadurch gekennzeichnet, dass** die innere Grösse mindestens ein Wert der Stellung einer Welle der Antriebsvorrichtung, ein Wert der Geschwindigkeit oder des Stroms des Motors oder ein anderer Wert der Aktivierungsdauer der Antriebsvorrichtung ist.

5. Verfahren zur Konfiguration nach einem der vorstehenden Ansprüche, **dadurch gekennzeichnet, dass** die Bestimmungsphase während der Speisungsphase abläuft.

6. Verfahren zur Konfiguration nach einem der vorstehenden Ansprüche, **dadurch gekennzeichnet, dass** die Speisungsphase nach einer Phase zur Einrichtung des Beschleunigungsmessers (ACC) auf dem beweglichen Element (COV) vorgenommen wird, und dass die Bestimmungsphase von einer Phase gefolgt wird, welche die Demontage des Beschleunigungsmessers des beweglichen Elements umfasst.

7. Verfahren zur Steuerung einer Antriebsvorrichtung (ACT) mit einem Motor (MOT) zur Bewegung eines beweglichen Elements (COV) einer haustechnischen Einrichtung (INST) zum Verschliessen, zur Abdunkelung, zum Sonnenschutz oder zur Abschirmung, **dadurch gekennzeichnet, dass** die Steuerung von Vorgängen **dadurch** veranlasst wird, dass die innere Grösse (RO, ROT1, ROT2) der Antriebsvorrichtung und der Bezug (REL), welcher zuvor durch die Anwendung des Verfahrens zur Konfiguration nach einem der vorstehenden Ansprüche aufgestellt wurde, verwendet wird.

8. Haustechnische Einrichtung (INST) zum Verschliessen, zum Verdunkeln, zum Sonnenschutz oder zur Abschirmung, mit einem beweglichen Element (COV), **dadurch gekennzeichnet, dass** sie einen am beweglichen Element angebrachten Beschleunigungsmesser (ACC) sowie Hardware (INT, TX, RX, CPU) und Software enthält, welche zur Ausführung des Verfahrens nach einem der vorstehenden Ansprüche eingerichtet ist.

9. Haustechnische Einrichtung nach vorstehendem Anspruch, **dadurch gekennzeichnet, dass** sie Mittel (AM) zur lösbaren Befestigung des Beschleunigungsmessers am beweglichen Element aufweist.
